# EUROPÄISCHE PATENTSCHRIFT

(11) **EP 1 166 238 B1**
(45) Veröffentlichungstag und Bekanntmachung des Hinweises auf die Patenterteilung: **10.09.2003**
(21) Anmeldenummer: 99910078.7
(22) Anmeldetag: 07.04.1999
(51) Int. Cl.: G07F 7/10, G07B 15/00, G06F 17/60

(54) **VERFAHREN UND SYSTEM ZUM BESTELLEN, LADEN UND VERWENDEN VON ZUTRITTS-TICKETS**
METHOD AND SYSTEM FOR ORDERING, LOADING AND USING ACCESS TICKETS
PROCEDE ET SYSTEME PERMETTANT DE COMMANDER, CHARGER ET UTILISER DES BILLETS D'ACCES

(43) Veröffentlichungstag der Anmeldung: 02.01.2002
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: BOVARD AG - Patentanwälte
(86) Internationale Anmeldenummer: CH9900142
(87) Internationale Veröffentlichungsnummer: WO00062260

(56) Entgegenhaltungen:
- EP-A- 0 713 198
- EP-A- 0 829 828
- WO-A-98/58510
- WO-A-99/09502
- US-A- 5 887 266

## Beschreibung

Die vorliegende Erfindung betrifft ein Verfahren und ein System zum Bestellen, Laden und Verwenden von Zutritts-Tickets für den Zutritt zu zutrittskontrollierten Dienstvorrichtungen.

In allgemein bekannten Verfahren und Systemen zur Bestellung von Zutritts-Tickets wird die Bestellung mittels Telefonanruf durch ein mobiles oder festinstalliertes Telefongerät an eine Reservationszentrale durchgeführt, welche den interessierten Kunden beispielsweise mittels gesprochener Menuführung über Veranstaltungen und/oder Vorführungen informiert und vom Kunden über die Wähltasten seines Telefongeräts Reservationen, respektive Bestellungen, für Zutritts-Tickets entgegennimmt. Die Reservationen und Bestellungen werden typischerweise in einer Datenbank abgespeichert und zum Beispiel an einen betreffenden Veranstalter weitergeleitet, der die gewünschten Zutritts-Tickets für den Kunden zum Abholen bereitstellt, oder die gewünschten Zutritts-Tickets werden dem Kunden direkt per Post zugestellt, wobei die Verrechnung per zugestellter Rechnung, per Barzahlung beim Abholen, oder per Telefonrechnung erfolgen kann. Nachteile solcher Verfahren und Systeme bestehen darin, dass beispielsweise zwischen der Bestellung und der Übergabe der Zutritts-Tickets an den Kunden beträchtliche Zeit vergeht, oder dass nicht immer sichergestellt ist, dass bestellte Zutritts-Tickets auch abgeholt werden.

Für die automatisierte Zutrittskontrolle zu zutrittskontrollierten Dienstvorrichtungen, wie beispielsweise öffentliche Transportmittel, gesicherte Gebäude, Räume oder Veranstaltungsgelände, sind Systeme und Verfahren bekannt, in denen typischerweise Lesegeräte verwendet werden, die Zutritts-Tickets lesen können und die mit Zutrittsvorrichtungen verbunden sind, welche auf Grund der von den Zutritts-Tickets gelesenen Informationen automatisch Türen oder Schranken öffnen und den Eingang zu betreffenden zutrittskontrollierten Dienstvorrichtungen freigeben. Insbesondere bei Sicherheitsgebäuden oder bei Arbeitsplätzen, bei denen die Arbeitszeiterfassung mit der Zutrittskontrolle verknüpft ist, werden bekannterweise auch persönliche Chipkarten eingesetzt, die zur Authentifizierung von Personen und der damit verbundenen automatischen Zutrittskontrolle dienen. Im allgemeinen sind solche persönlichen Chipkarten allerdings gezielt nur für diese spezielle Anwendung ausgelegt und die darauf gespeicherten personenbezogenen und anwendungsspezifischen Daten werden in der Regel nur selten verändert.

In der Patentschrift DE 43 01 039 C2 wird ein System zur Verwaltung von gemeinschaftlich benutzten Kraftfahrzeugen beschrieben, welches die oben beschriebene telefonische Reservierung und die Zutrittskontrolle mit einer persönlichen Chipkarte kombiniert. Im System gemäss DE 43 01 039 C2 klärt ein Kunde die Reservierung telefonisch mit einer Zentrale ab. Ein Computer mit einem Reservationsprogramm übermittelt entsprechend der vorgenommenen Reservierung Kundenreservierungsdaten mittels einem Modem über das Telefonnetz und ab einer Feststation mit einem schnurlosen Telefon zu einem Fahrzeug, wo sie abgespeichert werden. Der Kunde ist mit einer Chipkarte ausgerüstet, auf der seine Kundennummer und ein verschlüsselter Code gespeichert ist. Die Chipkarte wird in ein tragbares Infrarot-Handgerät eingeführt, welches mit einem Boardcomputer des Fahrzeuges kommunizieren kann. Die Zutrittsberechtigung wird durch den Austausch und die Verschlüsselung von Zufallszahlen festgestellt und gegebenenfalls die Fahrzeugtüre geöffnet. Im Innern des Fahrzeugs wird die Chipkarte in einen Kartenleser eingeführt und die Fahrberechtigung anhand der abgespeicherten Reservierungsdaten überprüft. Die im System gemäss DE 43 01 039 C2 als Zutritts-Ticket verwendete Chipkarte ist allerdings so ausgelegt, dass sie nur gezielt für diese Anwendung als Zutritts-Ticket eingesetzt werden kann.

In der Patentanmeldung EP 713 198 A2 wird ein elektronisches Ticket-Verkaufssystem beschrieben, in welchem von Kunden an einem Verkaufsterminal, das über Dateneingabe- und Datenanzeigemittel verfügt, gegen elektronische Bezahlung ab einer Chipkarte, elektronische Tickets auf die Chipkarte geladen werden können. Gemäss EP 713 198 A2 kann der Datenaustausch zwischen dem Verkaufsterminal und der Chipkarte über eine kontaktlose oder eine kontaktbehaftete Schnittstelle erfolgen. Im Ticket-Verkaufssystem gemäss EP 713 198 A2 können mehrere Verkaufsterminals über Kommunikationsverbindungen, insbesondere über das Telefonnetz, mit einer oder mehreren Ticket-Verkaufszentralen verbunden sein, welche Ticket-Verkaufszentralen die angeforderten Tickets an das Verkaufsterminal übermitteln, von dem die Tickets angefordert wurden.

In der Patentanmeldung WO 98/58510 wird ein Mobilfunktelefon mit einer entfembaren SIM-Karte (Subscriber Identity Module) beschrieben, das über mindestens eine drahtlose Schnittstelle verfügt, beispielsweise eine induktive Schnittstelle oder eine Infrarotschnittstelle, über welche die SIM-Karte ohne Benützung eines Mobilfunknetzes Daten mit einer externen Vorrichtung austauschen kann. Gemäss WO 98/58510 kann die externe Vorrichtung eine Zutrittskontroll-Vorrichtung sein, welche gegen den Empfang eines auf der SIM-Karte gespeicherten elektronischen Schlüssels den Zugang zu einer geschützten Zone freigibt.

In der Patentanmeldung WO 99/09502 wird ein elektronisches Handelssystem beschrieben, in welchem mittels eines Mobilfunktelefons über ein Mobilfunknetz elektronische Tickets von einem Dienstanbietersystem bestellt werden können. Gemäss WO 99/09502 werden in der Ticket-Bestellung die Benutzeridentifizierung des bestellenden Benutzers vom Mobilfunktelefon an das Dienstanbietersystem übermittelt. Gemäss WO 99/09502 wird die Ticket-Bestellung vom Dienstanbietersystem an ein Ticket-Ausgabesystem weitergeleitet, wobei die Benutzeridentifizierung im Dienstanbietersystem durch eine Kundennummer des betreffenden Benutzers ersetzt wird. Gemäss WO 99/09502 wird das bestellte Ticket danach vom Ticket-Ausgabesystem über das Dienstanbietersystem an das Mobilfunktelefon übermittelt, von welchem die Ticket-Bestellung aufgegeben wurde, und dort beispielsweise auf einer Chipkarte gespeichert. Gemäss WO 99/09502 können die gespeicherten Tickets als Zutritts-Tickets für den Zutritt zu zutrittskontrollierten Dienstvorrichtungen, beispielsweise in einem Kino, eingesetzt werden, wobei die Tickets, beispielsweise über eine kontaktlose Schnittstelle, an die Dienstvorrichtung übertragen werden.

Es ist eine Aufgabe der vorliegenden Erfindung, ein neues Verfahren und ein neues System zum Bestellen, Laden und Verwenden von Zutritts-Tickets für den Zutritt zu zutrittskontrollierten Dienstvorrichtungen vorzuschlagen, welche insbesondere flexibel für verschiedenste zutrittskontrollierte Dienstvorrichtungen eingesetzt werden können und in welchen Zutritts-Tickets über unterschiedlichste Bestellungskanäle bestellt werden können.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass Zutritts-Tickets für den Zutritt zu zutrittskontrollierten Dienstvorrichtungen, wie beispielsweise öffentliche Transportmittel, gesicherte Gebäude, Räume oder Veranstaltungsgelände, von einer Reservationszentrale durch Übermitteln von Bestellinformationen über einen Bestellkanal, von verschiedenen möglichen Bestellkanälen, an diese Reservationszentrale bestellt werden, wobei die Bestellinformationen die Rufnummer eines mobilen Kommunikationsendgeräts umfassen, wobei das mobile Kommunikationsendgerät beispielsweise ein Mobilfunktelefon oder ein Laptop- oder Palmtop-Computer mit geeignetem Kommunikationsmodul für Mobilnetze ist, dass bestellte Zutritts-Tickets über ein Mobilnetz, beispielsweise ein GSM- oder UMTS-Netz, an das Kommunikationsendgerät, welchem die genannte Rufnummer zugeordnet ist, übermittelt werden, dass empfangene Zutritts-Tickets in einem Speichermodul, beispielsweise auf einer Chipkarte, insbesondere eine SIM-Karte (Subscriber Identity Module), des genannten Kommunikationsendgeräts abgespeichert werden, dass Daten zwischen dem Speichermodul und einer Lesevorrichtung einer genannten Dienstvorrichtung über eine kontaktlose Schnittstelle ausgetauscht werden, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle", dass Entscheide über die Zutrittsberechtigung des Benutzers des genannten Kommunikationsendgeräts unter Berücksichtigung von in genannten Zutritts-Tickets enthaltenen Ticket-Informationen gefällt werden und dass entsprechend dem gefällten Entscheid der Zutritt des Benutzers zu der betreffenden Dienstvorrichtung durch eine mit der genannten Lesevorrichtung verbundene Zutrittsvorrichtung gewährt oder verwehrt wird. Der Vorteil dieses Vorgehens besteht darin, dass Zutritts-Tickets für die verschiedensten zutrittskontrollierten Dienstvorrichtungen über unterschiedlichste Bestellungskanäle bestellt werden können, beispielsweise schriftlich, telefonisch mit einem festinstallierten Telefon oder mit dem genannten mobilen Kommunikationsendgerät, mittels einem dedizierten Eingabeterminal oder mittels einem persönlichen Kommunikationsendgerät, beispielsweise über das Internet, und dass unabhängig vom benutzten Bestellungskanal und vom Besteller das bestellte Zutritts-Ticket in ein Speichermodul des mobilen Kommunikationsendgeräts, dem die spezifizierte Rufnummer zugeordnet ist, geladen wird, mittels welchem mobilen Kommunikationsendgerät der betreffende Benutzer ohne weiteren Aufwand und ohne zeitliche Verzögerung eine betreffende zutrittskontrollierte Dienstvorrichtung besuchen kann.

In einer Ausführungsvariante enthalten Zutritts-Tickets jeweils eine Ticket-Nummer, welche mit einer digitalen Signatur versehen ist, ein im Speichermodul gespeichertes Zutritts-Ticket wird an die genannte Lesevorrichtung übertragen, von der genannten Reservationszentrale werden Zutrittsdaten an die genannte Lesevorrichtung übertragen und der Entscheid über die Zutrittsberechtigung wird unter Berücksichtigung dieser Zutrittsdaten und durch Überprüfen der genannten Signatur gefällt. Diese Ausführungsvariante ist von Vorteil, wenn die Datenstruktur des Zutritts-Tickets einfach gehalten werden soll und wenn die Umtriebe für die Verarbeitung des Zutritts-Tickets in die Lesevorrichtung der Dienstvorrichtung ausgelagert werden sollen. Der Nachteil besteht allenfalls darin, dass die Lesevorrichtung der Dienstvorrichtung von der Reservationszentrale mit aktuellen Zutrittsdaten versorgt werden muss, so dass zwischen der Lesevorrichtung der Dienstvorrichtung und der Reservationszentrale eine Kommunikationsverbindung nötig ist.

In einer alternativen Ausführungsvariante umfassen die Zutritts-Tickets Ticket-Informationen über mindestens eine zutrittskontrollierte Dienstvorrichtung, beispielsweise die Identität eines Theaters oder eines Sportstadions, das Datum einer Aufführung, respektive eines Sportereignisses, der Entscheid über die Zutrittsberechtigung wird unter Berücksichtigung dieser Ticket-Informationen gefällt, und bei einem positiven Entscheid wird das im Speichermodul gespeicherte Zutritts-Ticket entwertet. Der Vorteil dieser Variante besteht darin, dass zutrittskontrollierte Dienstvorrichtungen nicht mit Zutrittsdaten aktualisiert werden müssen und deshalb ohne Kommunikationsverbindung autonom eingerichtet werden können.

In einer ersten Untervariante der letzteren Ausführungsvariante werden Ticket-Informationen an die genannte Lesevorrichtung übertragen und der Entscheid über die Zutrittsberechtigung des betreffenden Benutzers wird in dieser Lesevorrichtung gefällt. In einer zweiten Untervariante der letzteren Ausführungsvariante überträgt die Lesevorrichtung eine eindeutige Geräteidentifizierung an das betreffende Kommunikationsendgerät, der Entscheid über die Zutrittsberechtigung des betreffenden Benutzers wird in diesem Kommunikationsendgerät unter zusätzlicher Berücksichtigung der genannten Geräteidentifizierung gefällt und das Resultat dieses Entscheids wird an die genannte Lesevorrichtung übertragen. Die zweite Untervariante ist vor allem dann vorteilhaft, wenn die Lesevorrichtung der zutrittskontrollierten Dienstvorrichtung möglichst einfach gestaltet werden soll, insbesondere ohne Vernetzung der Lesevorrichtung.

In einer Ausführungsvariante sind mindestens gewisse Zutritts-Tickets einem bestimmten Benutzer zugeordnet und beim Entscheid über die Zutrittsberechtigung wird überprüft, ob ein betreffendes gewisses Zutritts-Ticket dem Benutzer zugeordnet ist, der durch eine im Speichermodul gespeicherte Benutzeridentifizierung identifiziert ist.

In einer Ausführungsvariante überträgt die Lesevorrichtung eine digital signierte eindeutige Geräteidentifizierung an das Kommunikationsendgerät und die Lesevorrichtung wird anhand dieser Geräteidentifizierung im Kommunikationsendgerät authentifiziert, bevor im Speichermodul gespeicherte Daten an die Lesevorrichtung übertragen werden. Dies hat den besonderen Vorteil, dass Zutritts-Tickets nicht durch unberechtigte Lesevorrichtungen entgegengenommen, respektive entwertet werden.

In einer Ausführungsvariante wird nach einer positiven Authentifizierung der Lesevorrichtung eine im Speichermodul gespeicherte Benutzeridentifizierung mit einer digitalen Signatur an die genannte Lesevorrichtung übertragen und die Lesevorrichtung authentifiziert den Benutzer des genannten Kommunikationsendgeräts anhand dieser Benutzeridentifizierung.

In einer Ausführungsvariante wird nach einem gefällten positiven Entscheid von der Lesevorrichtung eine Zutrittsbestätigung betreffend den erfolgreichen Zutritt auf das genannte Speichermodul übertragen. Dies hat den Vorteil, dass der betreffende Benutzer anhand dieser Zutrittsbestätigung zu einem späteren Zeitpunkt den Zutritt zur betreffenden Dienstvorrichtung nachweisen kann.

In einer Ausführungsvariante wird die genannte kontaktlose Schnittstelle energetisch, beispielsweise mittels Induktion, durch die genannte Lesevorrichtung gespeist. Dies hat den besonderen Vorteil, dass ein Datenaustausch zwischen dem Speichermodul und der Lesevorrichtung auch bei ausgeschaltetem Kommunikationsendgerät stattfinden kann.

Neben dem erfindungsgemässen Verfahren bezieht sich die Erfindung auch auf ein geeignetes System zur Ausführung dieses Verfahrens.

Nachfolgend wird eine Ausführung der vorliegenden Erfindung anhand eines Beispieles beschrieben. Das Beispiel der Ausführung wird durch die einzige beigelegte Figur illustriert, die ein schematisches Blockdiagramm zeigt, welches ein Kommunikationsendgerät darstellt, das über ein Mobilnetz mit einer Reservationszentrale verbunden ist und über eine kontaktlose Schnittstelle mit der Lesevorrichtung einer zutrittskontrollierten Dienstvorrichtung kommunizieren kann.

Ein interessierter Kunde kann Zutritts-Tickets für die verschiedensten zutrittskontrollierten Dienstvorrichtungen 3, wie beispielsweise öffentliche Transportmittel, Veranstaltungsgebäude (z.B. Schauspiel- oder Opernhäuser), Veranstaltungsräume (z.B. Kino- oder Konzertsäle), oder Veranstaltungsgelände (z.B. Messe- oder Sportgelände), durch Übermitteln von Bestellinformationen über unterschiedlichste Bestellungskanäle bestellen. Die Referenznummer 45 bezieht sich auf ein Eingabeterminal, das über eine Kommunikationsverbindung mit einer Reservationszentrale 4 verbunden ist. Solche Eingabeterminal 45 können an öffentlich zugänglichen Orten aufgestellt werden, zum Beispiel in öffentlichen Telefonsprechzellen (Publiphone), in Einkaufszentren, Bahnhöfen oder in anderen öffentlich zugänglichen Orten, die von vielen Menschen frequentiert werden, und können beispielsweise von interessierten Kunden dazu benutzt werden, Zutritts-Tickets von der Reservationszentrale 4 zu bestellen. Die Referenznummer 51 bezieht sich auf ein persönliches Kommunikationsendgerät, beispielsweise ein Personal Computer mit Kommunikationsmodulen, das über ein Telekommunikationsnetz 5, beispielsweise das öffentliche geschaltete Telefonnetz oder das Internet, mit der Reservationszentrale 4 verbunden ist und von interessierten Kunden dazu benutzt werden kann, Zutritts-Tickets von der Reservationszentrale 4 zu bestellen. Als weitere Möglichkeiten für Bestellkanäle sollten hier auch die persönliche mündliche Bestellung an einem Schalter des Betreibers der Reservationszentrale 4 oder einer spezialisierten Vertriebsorganisation, Telefonanrufe mit mündlicher Bestellung oder Bestellung unter gesprochener Menuführung oder mit Spracherkennung oder auch die schriftliche Bestellung oder die Bestellung mittels einem mobilen Kommunikationsendgerät 1 über ein Mobilnetz 6 (beispielsweise verbal oder mittels SMS- oder USSD-Meldungen) als Beispiele angeführt werden, wobei bei der mündlichen und schriftlichen Variante auch nachträgliche Dateneingabe durch Datentypisten der Reservationszentrale 4 notwendig sein können. Die vom interessierten Benutzer an die Reservationszentrale 4 übermittelten Bestellinformationen umfassen beispielsweise Angaben über eine spezifische Veranstaltung, zum Beispiel eine Theaterpremiere im Stadttheater am 13. Mai um zwanzig Uhr, Angaben über die gewünschte Sitzreihe oder gegebenenfalls die Fahrklasse, die Anzahl gewünschter Tickets, Angaben über die Art der Tickets, beispielsweise persönliche Namens-Tickets, Mehrfach-Tickets (Abonnemente, Tageskarten, Wochenkarten, etc.), oder übertragbare Tickets, und Angaben über den Zahlungsmodus, beispielsweise durch schriftliche Rechnung per Post, durch Kreditkarte unter Angabe der Kreditkartennummer, durch Abrechnung über die Telefonrechnung, oder gegebenenfalls durch Barzahlung, etc. Bei jeder Bestellung wird zudem in den Bestellinformationen die Rufnummer (mindestens) eines mobilen Kommunikationsendgeräts angegeben, beispielsweise die MSISDN-Nummer (Mobile Subscriber ISDN Nummer), auf welches die bestellten Zutritts-Tickets geladen werden sollen.

Die übermittelten Bestellinformationen werden in der Reservationszentrale 4 von einem Bestellmodul 41 entgegengenommen und in einer Datenbank der Reservationszentrale 4 abgespeichert. Die Reservationszentrale 4 ist beispielsweise auf einem herkömmlichen Kommunikationsserver ausgeführt, der über bekannte Hard- und Softwarekomponenten verfügt, um mit Mobilnetzen 6 und Festnetzen 5 verbunden zu werden und über diese zu kommunizieren. Die Reservationszentrale 4 verfügt über Funktionsmodule, zum Beispiel das bereits erwähnte Bestellmodul 41 oder weitere Funktionsmodule, die in den folgenden Abschnitten beschrieben werden und welche beispielsweise als programmierte Softwaremodule ausgeführt sind. Entsprechend den erhaltenen Bestellinformationen übermittelt ein Übermittlungsmodul 44 der Reservationszentrale 4 bestellte Zutritts-Tickets über das Mobilnetz 6, beispielsweise ein GSM- (Global System for Mobile Communication), ein UMTS-Netz (Universal Mobile Telephone System) oder ein anderes Mobilnetz, an das durch die oben erwähnte Rufnummer spezifizierte mobile Kommunikationsendgerät 1, zum Beispiel ein Mobilfunktelefon oder ein Laptop- oder Palmtop-Computer mit geeignetem Kommunikationsmodul für Mobilnetze 6.

Die Übermittlung von Zutritts-Tickets von der Reservationszentrale 4 an Kommunikationsendgeräte 1 erfolgt beispielsweise gemäss dem in der Patentschrift EP 0689 368 B1 beschriebenen SICAP-Verfahren, wobei die Reservationszentrale 4 für diesen Zweck beispielsweise über eine Kurzmeldungsdienstzentrale (SMS-C, Short Message Service Centre) verfügt. Gemäss dem SICAP-Verfahren werden in sogenannten SMS-Kurzmeldungen zusätzlich zum standardisierten Datenvorsatz spezielle Codes übertragen, die einen speziellen Dienst anzeigen und beispielsweise mittels geeigneten Filtem in den Identifizierungsmodulen von mobilen Kommunikationsendgeräten erkannt und entsprechend dem speziellen Code gemäss einer speziellen Prozedur behandelt werden. Die Übertragung kann aber auch auf andere Weise, beispielsweise mittels USSD-Meldungen (Unstructured Supplementary Services Data) oder über eine Datenverbindung erfolgen.

Die übermittelten Zutritts-Tickets werden im betreffenden mobilen Kommunikationsendgerät 1 entgegengenommen und dort von einem Lademodul 211 in einem Speichermodul 21, beispielsweise auf der SIM-Karte 2 (Subscriber Identity Module) des mobilen Kommunikationsendgeräts 1 abgespeichert. Das Lademodul 211 ist beispielsweise, wie oben erwähnt, eine gemäss dem SICAP-Verfahren aktivierte spezielle Prozedur, die beispielsweise als programmiertes Softwaremodul auf dem Identifizierungsmodul des mobilen Kommunikationsendgeräts 1 ausgeführt ist, welches beispielsweise eine Chipkarte 2, insbesondere eine SIM-Karte 2 mit einem Prozessor 22 und einem Speichermodul 21 ist.

Je nach Ausführungsvariante und/oder Anwendung enthalten Zutritts-Tickets jeweils eine Ticket-Nummer, welche beispielsweise mit einer digitalen Signatur versehen ist, oder sie umfassen Ticket-Informationen über mindestens eine zutrittskontrollierte Dienstvorrichtung 3, beispielsweise die Identität eines Theaters oder eines Sportstadions und das Datum einer Aufführung, respektive eines Sportereignisses, und gegebenenfalls weitere zusätzliche Informationen, wie eine reservierte Sitzreihe oder Sitznummer oder, insbesondere für Mehrfach-Tickets, eine Gültigkeitsdauer oder -periode sowie gegebenenfalls eine Anzahl berechtigter Zutritte. Vorteilhafterweise kann ein betreffender Kunde (insbesondere) die detailliertere Ausprägung eines Zutritts-Tickets im Display seines mobilen Kommunikationsendgeräts 1 kontrollieren, wie wenn er ein physisches Zutritts-Ticket hätte. Zutritts-Tickets können beispielsweise in der Form von kleinen Programmanwendungen, sogenannte Applets, auf Chipkarten 2 geladen werden, die solche Applets behandeln können, zum Beispiel eine sogenannte Java-Karte (Java ist eine registrierte Warenmarke von SUN Microsystems). Solche Applets können bei der Entwertung, welche später beschrieben wird, beispielsweise automatisch gelöscht werden.

Der Benutzer eines mobilen Kommunikationsendgeräts 1 nähert sich mit seinem mobilen Kommunikationsendgerät 1 einer Lesevorrichtung 31 einer zutrittskontrollierten Dienstvorrichtung 3, für welche er über ein in einem Speichermodul 21 des mobilen Kommunikationsendgeräts 1 gespeichertes Zutritts-Ticket verfügt. In den folgenden Abschnitten werden verschiedene Ausführungsvarianten für den Vorgang bei der Ticket-Kontrolle zwischen dem mobilen Kommunikationsendgerät 1 und der Lesevorrichtung 31 der zutrittskontrollierten Dienstvorrichtung beschrieben, denen allen der Datenaustausch über eine kontaktlose Schnittstelle 13 zwischen dem mobilen Kommunikationsendgerät 1 und der Lesevorrichtung 31 gemeinsam ist, wofür die Lesevorrichtung 31 und das mobile Kommunikationsendgerät 1 mit geeigneten Transceivers 33, respektive 11, ausgeführt sind. Diese Transceivers 11, 33 sind beispielsweise geeignet für eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle oder eine Home RF (Radio Frequency)-Schnittstelle, wobei die induktive Schnittstelle beispielsweise mit einer bei 13.56 MHz liegenden Frequenz operiert, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle". Je nach Art der kontaktlosen Schnittstelle kann der geeignete Transceiver im mobilen Kommunikationsendgerät 1 im Gehäuse oder auf dem Identifizierungsmodul 2 des Kommunikationsendgeräts 1 integriert sein. Für den Datenaustausch mit der Lesevorrichtung 31 über diese kontaktlose Schnittstelle 13 verfügt das mobile Kommunikationsendgerät 1 über ein Kommunikationsmodul 212, das beispielsweise als programmiertes Softwaremodul auf dem Identifizierungsmodul 2 des mobilen Kommunikationsendgeräts 1 ausgeführt ist, welches beispielsweise eine SIM-Karte 2 mit einem Prozessor 22 und einem Speichermodul 21 ist. In allen beschriebenen Ausführungsvarianten wird der Entscheid über die Zutrittsberechtigung eines betreffenden Benutzers eines mobilen Kommunikationsendgeräts 1 in einem Entscheidungsmodul 213, 312 gefällt, wobei entsprechend dem gefällten Entscheid dem genannten Benutzer der Zutritt zu der betreffenden zutrittskontrollierten Dienstvorrichtung 3 durch eine mit der Lesevorrichtung 31 verbundene Zutrittsvorrichtung 32, beispielsweise eine automatische Türe oder Schranke oder eine Signallampe oder eine andere geeignete Vorrichtung, gewährt oder verwehrt wird.

In einer ersten Ausführungsvariante mit Zutritts-Tickets, die jeweils eine Ticket-Nummer enthalten, welche beispielsweise mit einer digitalen Signatur versehen ist, wird ein im Speichermodul 21 gespeichertes Zutritts-Ticket an die Lesevorrichtung 31 übertragen. Die Lesevorrichtung 31 wird von einem Aktualisierungsmodul 42 der Reservationszentrale 4, beispielsweise ein programmiertes Softwaremodul, mit aktuellen Zutrittsdaten versorgt, die in einer Tabelle 43 in der Reservationszentrale 4 gespeichert sind. Die Übertragung dieser Zutrittsdaten erfolgt über ein Telekommunikationsnetz 5, beispielsweise ein Festnetz, zum Beispiel das öffentliche geschaltete Telefonnetz, das Internet, ein LAN (Local Area Network) oder WAN (Wide Area Network), oder ein Mobilnetz. Die Versorgung der Lesevorrichtung 31 mit aktuellen Zutrittsdaten erfolgt beispielsweise periodisch oder auf Anfrage durch die Lesevorrichtung 31. Die Zutrittsdaten umfassen beispielsweise zusätzliche Ticket-Informationen für eine bestimmte Ticket-Nummer oder für sämtliche für die betreffende zutrittskontrollierte Dienstvorrichtung 3 reservierte Zutritts-Tickets. Solche Ticket-Informationen beinhalten beispielsweise Angaben über eine bestimmte Veranstaltung, wie Ort und Zeit, über einen reservierten Platz, wie Sitznummer oder Reihe, und eventuell Angaben und/oder Identifizierungsinformationen betreffend den zutrittsberechtigten Benutzer. Gemäss dieser ersten Ausführungsvariante wird der Entscheid über die Zutrittsberechtigung des betreffenden Benutzers durch das Entscheidungsmodul 312 der Lesevorrichtung 31, beispielsweise ein programmiertes Softwaremodul, unter Berücksichtigung der der betreffenden Ticket-Nummer entsprechenden Zutrittsdaten und durch Überprüfen der oben erwähnten digitalen Signatur gefällt. In dieser Ausführungsvariante können Zutritts-Tickets, die für den berechtigten Zutritt zu einer betreffenden zutrittskontrollierten Vorrichtung 3 verwendet wurden, beispielsweise durch Aktualisieren der in der Reservationszentrale 4 gespeicherten Zutrittsdaten entwertet werden, welche beispielsweise von der Lesevorrichtung 31 entsprechend informiert wurde.

In einer zweiten Ausführungsvariante mit Zutritts-Tickets, die jeweils Ticket-Informationen über mindestens eine zutrittskontrollierte Dienstvorrichtung 3 enthalten, werden in den Entscheidungsmodulen 213, 312 Entscheide über die Zutrittsberechtigung unter Berücksichtigung dieser Ticket-Informationen gefällt. In dieser zweiten Ausführungsvariante umfassen die mobilen Kommunikationsendgeräte 1 jeweils ein Entwertungsmodul 214, beispielsweise ein programmiertes Softwaremodul, zum Beispiel im Speichermodul 21 der SIM-Karte 2, welches bei einem positiven Entscheid das im Speichermodul 21 gespeicherte betreffende Zutritts-Ticket entwertet, wobei bei Mehrfach-Tickets entsprechend nur eine Zutrittsberechtigung entwertet wird. In dieser Ausführungsvariante kann der Entscheid in einer ersten Untervariante durch ein Entscheidungsmodul 312 in der Lesevorrichtung 31 gefällt werden, zum Beispiel unter Zuhilfenahme von Zusatzinformationen, wie beispielsweise eine Referenzuhr, nachdem das Zutritts-Ticket wie oben beschrieben vom mobilen Kommunikationsendgerät 1 über die kontaktlose Schnittstelle 13 an die Lesevorrichtung 31 übertragen wurde, wobei die Lesevorrichtung 31 nach einem positiven Entscheid das oben erwähnte Entwertungsmodul 214 über die kontaktlose Schnittstelle 13 beauftragt, das betreffende Zutritts-Ticket zu entwerten. In einer zweiten Untervariante umfasst die Lesevorrichtung 31 ein Identifizierungsmodul 314, mittels welchem sich die Lesevorrichtung 31 beim betreffenden mobilen Kommunikationsendgerät 1 identifiziert, indem das Identifizierungsmodul 314, beispielsweise ein programmiertes Softwaremodul, mittels des Transceivers 33 eine eindeutige Geräteidentifizierung über die kontaktlose Schnittstelle an dieses mobile Kommunikationsendgerät 1 überträgt. In dieser zweiten Untervariante braucht das Zutritts-Ticket nicht an die Lesevorrichtung 31 übertragen zu werden, da der Entscheid über die Zutrittsberechtigung des betreffenden Benutzers im Entscheidungsmodul 213 des mobilen Kommunikationsendgeräts 1 unter zusätzlicher Berücksichtigung der von der Lesevorrichtung 31 erhaltenen Geräteidentifizierung gefällt wird, wobei das Entscheidungsmodul 213 beispielsweise ein programmiertes Soflwaremodul im Speichermodul 21 der SIM-Karte 2 ist und wobei das Resultat des Entscheids über die kontaktlose Schnittstelle 13 an die Lesevorrichtung 31 übertragen wird.

An dieser Stelle sollte erwähnt werden, dass der Datenaustausch zwischen dem Speichermodul 21 des mobilen Kommunikationsendgeräts 1 und der Lesevorrichtung 31 auch bei ausgeschaltetem Kommunikationsendgerät 1 erfolgen kann, wenn die für den Datentransfer notwendigen Komponenten, insbesondere die kontaktlose Schnittstelle, extern von der Lesevorrichtung 31 gespiesen werden, beispielsweise mittels Induktion einer magnetischen Spule des mobilen Kommunikationsendgeräts 1, zum Beispiel im Gehäuse oder im Innern des Kommunikationsendgeräts 1, beispielsweise auf der SIM-Karte 2. Das für den Datenaustausch benutzte Protokoll kann beispielsweise vorsehen, dass die Initiierung eines entsprechenden Dialogs zwischen dem mobilen Kommunikationsendgerät 1 und der Lesevorrichtung 31 vom mobilen Kommunikationsendgerät 1 durch Aussendung einer Initiierungssequenz eingeleitet wird.

In einer Ausführungsvariante sind gewisse Zutritts-Tickets einem bestimmten Benutzer zugeordnet, das heisst, die erwähnten Ticket-Informationen oder die in der Tabelle 43 der Reservationszentrale 4 gespeicherten Zutrittsdaten enthalten Identifizierungsangaben über den zugeordneten berechtigten Benutzer, beispielsweise dessen IMSI-Nummer (International Mobile Subscriber Identity) oder seine IDUI (International Debit User Identification). Folglich wird beim Entscheid über die Zutrittsberechtigung auch überprüft, ob ein betreffendes Zutritts-Ticket dem Benutzer zugeordnet ist, der durch eine im Speichermodul 21, beispielsweise auf der SIM-Karte 2, gespeicherte Benutzeridentifizierung identifiziert ist. Wenn diese Überprüfung in der Lesevorrichtung 31 durchgeführt wird, beispielsweise im Entscheidungsmodul 312, wird die im Speichermodul 21 gespeicherte Benutzeridentifizierung über die kontaktlose Schnittstelle 13 an die Lesevorrichtung 31 übermittelt. Wenn diese Überprüfung hingegen im mobilen Kommunikationsendgerät 1 erfolgt, beispielsweise im Entscheidungsmodul 213, muss die im Speichermodul 21 gespeicherte Benutzeridentifizierung nicht an die Lesevorrichtung 31 übermittelt werden.

In einer Ausführungsvariante überträgt die Lesevorrichtung 31 über die kontaktlose Schnittstelle 13 immer eine digital signierte eindeutige Geräteidentifizierung an das mobile Kommunikationsendgerät 1, beispielsweise als Anwort auf eine oben erwähnte Initiierungssequenz, die den Dialog zwischen der Lesevorrichtung 31 und dem mobilen Kommunikationsendgerät 1 einleitet. Anhand dieser digital signierten Geräteidentifizierung kann die Lesevorrichtung 31, respektive die zugehörige zutrittskontrollierte Dienstvorrichtung 3, durch ein Authentifizierungsmodul 215 des mobilen Kommunikationsendgeräts 1 authentifiziert werden, wobei das Authentifizierungsmodul 215 beispielsweise ein programmiertes Softwaremodul ist, beispielsweise auf dem Speichermodul 21 der SIM-Karte 2. Dies ermöglicht es, dass Zutritts-Tickets nicht durch unberechtigte Lesevorrichtungen 31 entgegengenommen, respektive entwertet werden, da im Speichermodul 21 gespeicherte Daten erst an die Lesevorrichtung 31 übertragen werden, wenn diese Lesevorrichtung 31 eindeutig authentifiziert wurde. In ähnlicher Weise kann die Lesevorrichtung 31 einen betreffenden Benutzer authentifizieren, indem, beispielsweise nach einer positiven Authentifizierung der Lesevorrichtung 31, vom mobilen Kommunikationsendgerät 1, beispielsweise durch das Authentifizierungsmodul 215, eine im Speichermodul 21 gespeicherte Benutzeridentifizierung mit einer digitalen Signatur über die kontaktlose Schnittstelle 13 an die genannte Lesevorrichtung 31 übertragen wird und dort vom Authentifizierungsmodul 311 der Lesevorrichtung 31, beispielsweise ein programmiertes Softwaremodul, authentifiziert wird.

In einer Ausführungsvariante wird nach einem gefällten positiven Entscheid von einem Bestätigungsmodul 313 der Lesevorrichtung 31, beispielsweise ein programmiertes Softwaremodul, eine Zutrittsbestätigung, zur Quittierung des erfolgreichen Zutritts zur zutrittskontrollierten Dienstvorrichtung 3, über die kontaktlose Schnittstelle 13 an das mobile Kommunikationsendgerät 1 übertragen und dort im Speichermodul 21 der SIM-Karte 2 abgespeichert. Auf Grund dieser Zutrittsbestätigung, die vorzugsweise vom Bestätigungsmodul 313 der Lesevorrichtung 31 mit einer digitalen Signatur versehen ist, kann der betreffende Benutzer beispielsweise zu einem späteren Zeitpunkt den Zutritt zur betreffenden Dienstvorrichtung 3 nachweisen.

An dieser Stelle sollte zudem erwähnt werden, dass das mobile Kommunikationsendgerät 1, insbesondere das Speichermodul 21 der SIM-Karte 2, zusätzliche Softwarefunktionen aufweisen kann, welche es ermöglichen, dass ein im Speichermodul 21 eines ersten mobilen Kommunikationsendgeräts 1 gespeichertes Zutritts-Ticket auf das Speichermodul eines zweiten mobilen Kommunikationsendgeräts übertragen werden kann, beispielsweise mittels dem Transceiver 11 über die kontaktlose Schnittstelle 13 oder über das Mobilnetz 6, zum Beispiel mittels SMS- oder USSD-Meldungen, oder über eine andere geeignete Verbindung zwischen dem ersten und zweiten mobilen Kommunikationsendgerät. In ähnlicher Weise ist es zudem auch möglich, dass ein im Speichermodul 21 eines mobilen Kommunikationsendgeräts 1 gespeichertes Zutritts-Ticket auf eine externe Chipkarte übertragen werden kann, die selbst über eine kontaktlose Schnittstelle verfügt, beispielsweise in Form einer integrierten elektromagnetischen Spule, oder die für diesen Zweck über eine (zweite) kontaktbehaftete Schnittstelle mit dem Kommunikationsendgerät 1 verbunden wird; sogenannte Dual-Slot Mobilgeräte sind bereits auf dem Markt verfügbar.

Der Fachmann wird verstehen, dass für die gesicherte Übertragung und zur Sicherstellung der Authentizität (Echtheit) der Zutritts-Tickets, sowie von anderen drahtlos übertragenen Identifizierungen, beispielsweise die erwähnte Geräteidentifizierung oder Benutzeridentifizierung, das mobile Kommunikationsendgerät 1, insbesondere das Speichermodul 21, und die Lesevorrichtung 31 mit den nötigen Funktionen, beispielsweise programmierte Softwarefunktionen, für geeignete Signierungs- und/oder Chiffrierverfahren ausgestattet sind. Es ist auch möglich, dass bei der Authentifizierung Vertrauensinstanzen, beispielsweise unter Zuhilfenahme von TTP-Diensten (Trusted Third Party), involviert werden, beispielsweise für die digitale Signierung von Identifizierungsnummern und/oder Zutritts-Tickets.

Die Verrechnung von bestellten Zutritts-Tickets kann beispielsweise durch die Reservationszentrale 4 gemäss dem vom betreffenden Benutzer gewünschten Zahlungsmodus erfolgen.

Das Anwendungsgebiet der vorliegenden Erfindung ist sehr gross und keinesfalls nur auf die angegebenen Anwendungsbeispiele beschränkt.

Neben dem Verkauf, der Lizenzierung und dem Betrieb von beschriebenen Gesamtsystemen kann es auch interessant sein, Datenträger mit darauf gespeicherten programmierten Softwaremodulen zu verkaufen oder zu vermieten, welche einen herkömmlichen Kommunikationsserver so steuern, dass er sich wie eine beschriebene Reservationszentrale 4 verhält, oder welche, insbesondere in der Ausführung als SIM-Karte, ein mobiles Kommunikationsendgerät 1 befähigen, am beschriebenen Verfahren teilzunehmen. Zudem kann auch der Verkauf, die Vermietung oder der Betrieb von Lesevorrichtungen 31 für zutrittskontrollierte Dienstvorrichtungen 3 wirtschaftlich sehr interessant sein. Selbst der Verkauf, die Vermietung oder der Betrieb von Eingabeterminals 45 kann sich lohnen.

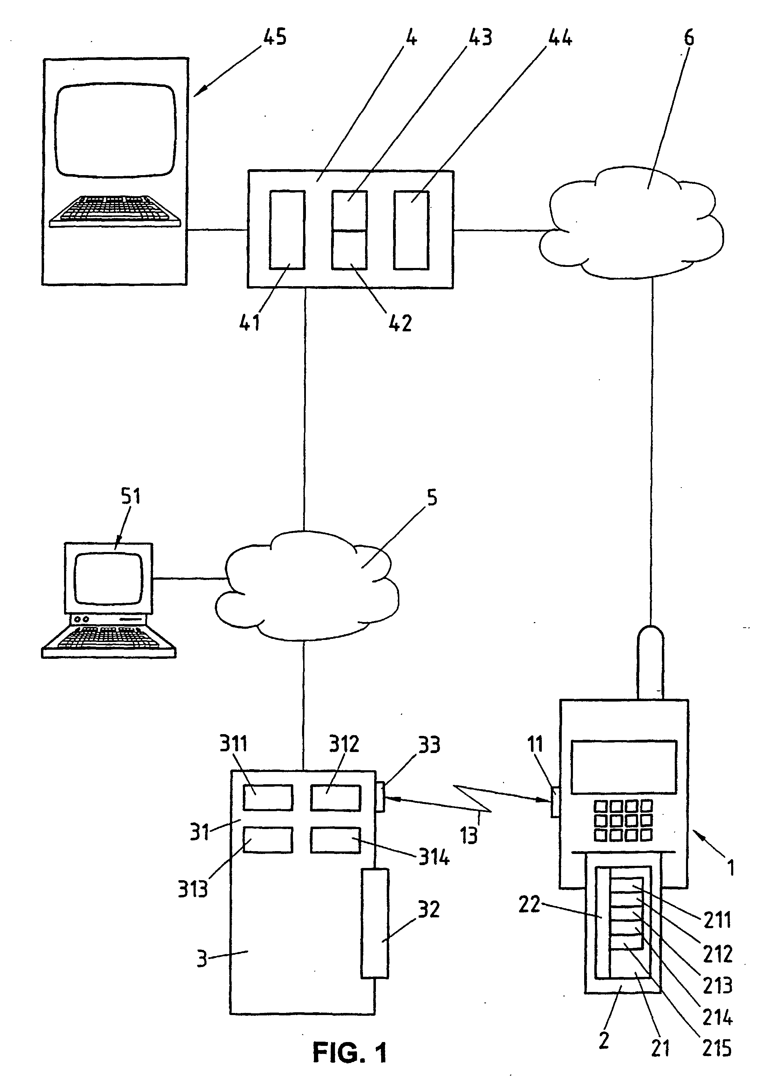

## Patentansprüche

1. Verfahren zum Bestellen, Laden und Verwenden von Zutritts-Tickets für den Zutritt zu zutrittskontrollierten Dienstvorrichtungen (3), in welchem Verfahren Zutritts-Tickets in einem Speichermodul (21) eines mobilen Kommunikationsendgeräts (1) abgespeichert werden, in welchem Verfahren Daten zwischen dem Speichermodul (21) und einer Lesevorrichtung (31) einer betreffenden Dienstvorrichtung (3) über eine kontaktlose Schnittstelle (13) ausgetauscht werden, in welchem Verfahren ein Entscheid über die Zutrittsberechtigung des Benutzers des mobilen Kommunikationsendgeräts (1) unter Berücksichtigung von im genannten Zutritts-Ticket enthaltenen Ticket-Informationen gefällt wird, und in welchem Verfahren entsprechend dem gefällten Entscheid, der Zutritt des Benutzers zu der betreffenden Dienstvorrichtung (3) durch eine mit der genannten Lesevorrichtung verbundene Zutrittsvorrichtung (32) gewährt oder verwehrt wird, **gekennzeichnet durch** folgende Schritte:
- Bestellen von mindestens einem Zutritts-Ticket von einer Reservationszentrale (4) **durch** Übermitteln von Bestellinformationen, die von einem Benutzer angegeben werden, über einen Bestellkanal, von verschiedenen möglichen Bestellkanälen, an die genannte Reservationszentrale (4), wobei die Bestellinformationen die Rufnummer des mobilen Kommunikationsendgeräts (1) umfassen, und
- Übermitteln des bestellten Zutritts-Tickets über ein Mobilnetz (6) an dasjenige mobile Kommunikationsendgerät (1), welchem die in den Bestellinformationen enthaltene Rufnummer zugeordnet ist.

2. Verfahren gemäss Anspruch 1, **dadurch gekennzeichnet, dass** die genannten Zutritts-Tickets jeweils eine Ticket-Nummer enthalten, welche mit einer digitalen Signatur versehen ist, dass das im genannten Speichermodul (21) gespeicherte Zutritts-Ticket an die genannte Lesevorrichtung (31) übertragen wird, dass von der genannten Reservationszentrale (4) Zutrittsdaten an die genannte Lesevorrichtung (31) übertragen werden, und dass der Entscheid über die Zutrittsberechtigung unter Berücksichtigung dieser Zutrittsdaten und durch Überprüfen der genannten Signatur gefällt wird.

3. Verfahren gemäss Anspruch 1, **dadurch gekennzeichnet, dass** die genannten Zutritts-Tickets Ticket-Informationen über mindestens eine zutrittskontrollierte Dienstvorrichtung (3) umfassen, dass der Entscheid über die Zutrittsberechtigung unter Berücksichtigung dieser Ticket-Informationen gefällt wird und dass bei einem positiven Entscheid das im Speichermodul (21) gespeicherte Zutritts-Ticket entwertet wird.

4. Verfahren gemäss Anspruch 3, **dadurch gekennzeichnet, dass** die genannten Ticket-Informationen an die genannte Lesevorrichtung (31) übertragen werden und dass der Entscheid in dieser Lesevorrichtung (31) gefällt wird.

5. Verfahren gemäss Anspruch 3, **dadurch gekennzeichnet, dass** die genannte Lesevorrichtung (31) eine Geräteidentifizierung an das genannte Kommunikationsendgerät (1) überträgt, dass der Entscheid in diesem Kommunikationsendgerät (1) unter zusätzlicher Berücksichtigung der genannten Geräteidentifizierung gefällt wird und dass das Resultat dieses Entscheids an die genannte Lesevorrichtung (31) übertragen wird.

6. Verfahren gemäss einem der Ansprüche 1 bis 5, **dadurch gekennzeichnet, dass** mindestens gewisse Zutritts-Tickets einem bestimmten Benutzer zugeordnet sind und dass beim Entscheid über die Zutrittsberechtigung überprüft wird, ob das betreffende gewisse Zutritts-Ticket dem Benutzer zugeordnet ist, der durch eine im genannten Speichermodul (21) gespeicherte Benutzeridentifizierung identifiziert ist.

7. Verfahren gemäss einem der Ansprüche 1 bis 6, **dadurch gekennzeichnet, dass** die genannte Lesevorrichtung (31) eine digital signierte Geräteidentifizierung an das genannte Kommunikationsendgerät (1) überträgt und dass die genannte Lesevorrichtung (31) anhand dieser Geräteidentifizierung im Kommunikationsendgerät (1) authentifiziert wird, bevor im Speichermodul (21) gespeicherte Daten an die Lesevorrichtung (31) übertragen werden.

8. Verfahren gemäss Anspruch 7, **dadurch gekennzeichnet, dass** nach einer positiven Authentifizierung der genannten Lesevorrichtung (31) eine im genannten Speichermodul (21) gespeicherte Benutzeridentifizierung mit einer digitalen Signatur an die genannte Lesevorrichtung (31) übertragen wird und dass die genannte Lesevorrichtung (31) den Benutzer des genannten Kommunikationsendgeräts (1) anhand dieser Benutzeridentifizierung authentifiziert.

9. Verfahren gemäss einem der Ansprüche 1 bis 8, **dadurch gekennzeichnet, dass** nach einem gefällten positiven Entscheid von der genannten Lesevorrichtung (31) eine Zutrittsbestätigung auf das genannte Speichermodul (21) übertragen wird.

10. Verfahren gemäss einem der Ansprüche 1 bis 9, **dadurch gekennzeichnet, dass** die genannte kontaktlose Schnittstelle (13) energetisch durch die genannte Lesevorrichtung (31) gespeist wird.

11. System zum Bestellen, Laden und Verwenden von Zutritts-Tickets, welches System ein Mobilnetz (6) umfasst, in welchem eine Vielzahl von Benutzern mittels mobilen Kommunikationsendgeräten (1) kommunizieren können und mit welchem Mobilnetz (6) mindestens eine Reservationszentrale (4) verbunden ist, welches System zutrittskontrollierte Dienstvorrichtungen (3) umfasst, für den Zutritt, zu welchen Dienstvorrichtungen (3) genannte Zutritts-Tickets verwendet werden, wobei die genannten Dienstvorrichtungen (3) mit Lesevorrichtungen (31) versehen sind, welche Transceivers (33) für den Datenaustausch über eine kontaktlose Schnittstelle (13) umfassen, wobei die genannten Kommunikationsendgeräte (1) jeweils ein Lademodul (211) umfassen, welches Lademodul (211) empfangene Zutritts-Tickets in einem Speichermodul (21) des betreffenden Kommunikationsendgeräts (1) abspeichert, wobei die genannten Kommunikationsendgeräte (1) jeweils ein Kommunikationsmodul (212) umfassen, welches mittels einem Transceiver (11) über die genannte kontaktiose Schnittstelle (13) Daten zwischen dem genannten Speichermodul (21) und einer der genannten Lesevorrichtungen (31) austauscht, welches System Entscheidungsmodule (213, 312) umfasst, welche Entscheidungsmodule (213, 312) Entscheide über die Zutrittsberechtigung des Benutzers eines der genannten Kommunikationsendgeräte (1) unter Berücksichtigung von in den genannten Zutritts-Tickets enthaltenen Ticket-Informationen fällen, und wobei die genannten Lesevorrichtungen (31) mit Zutrittsvorrichtungen (32) verbunden sind, die entsprechend dem gefällten Entscheid dem genannten Benutzer den Zutritt zu einer der genannten Dienstvorrichtungen (3) gewähren oder verwehren, **dadurch gekennzeichnet,**
**dass** die genannte Reservationszentrale (4) ein Bestellmodul (41) umfasst, welches über verschiedene Bestellungskanäle Bestellungen mit Bestellinformationen, die von einem Benutzer angegeben werden, für Zutritts-Tickets entgegennimmt, wobei die Bestellinformationen die Rufnummer eines der genannten Kommunikationsendgeräte (1) umfassen, und
**dass** die genannte Reservationszentrale (4) ein Übermittlungsmodul (44) umfasst, welches bestellte Zutritts-Tickets über ein Mobilnetz (6) an dasjenige Kommunikationsendgerät (1) übermittelt, welchem die in den Bestellinformationen enthaltene Rufnummer zugeordnet ist.

12. System gemäss Anspruch 11, **dadurch gekennzeichnet, dass** die genannten Zutritts-Tickets jeweils eine Ticket-Nummer enthalten, welche mit einer digitalen Signatur versehen ist, dass die genannte Reservationszentrale (4) eine Tabelle (43) mit gespeicherten Zutrittsdaten umfasst, dass die genannte Reservationszentrale (4) über ein Telekommunikationsnetz (5) mit den genannten Lesevorrichtungen (31) verbunden ist, dass die genannte Reservationszentrale (4) ein Aktualisierungsmodul (42) umfasst, welches die genannten Zutrittsdaten über das genannte Telekommunikationsnetz (5) an eine der genannten Lesevorrichtungen (31) überträgt und dass die genannten Entscheidungsmodule (312) sich in den genannten Lesevorrichtungen (31) befinden und Entscheide über die Zutrittsberechtigung unter Berücksichtigung der genannten Zutrittsdaten und durch Überprüfen der genannten Signatur fällen.

13. System gemäss Anspruch 12, **dadurch gekennzeichnet, dass** die genannten Zutritts-Tickets Ticket-Informationen über mindestens eine der zutrittskontrollierten Dienstvorrichtungen (3) umfassen, dass die genannten Entscheidungsmodule (213, 312) Entscheide über die Zutrittsberechtigung unter Berücksichtigung dieser Ticket-Informationen fällen und dass die genannten Kommunikationsendgeräte (1) jeweils ein Entwertungsmodul (214) umfassen, welches bei einem positiven Entscheid das im betreffenden Speichermodul (21) gespeicherte Zutritts-Ticket entwertet.

14. System gemäss Anspruch 13, **dadurch gekennzeichnet, dass** die genannten Entscheidungsmodule (312) sich in den genannten Lesevorrichtungen (31) befinden.

15. System gemäss Anspruch 13, **dadurch gekennzeichnet, dass** die genannten Lesevorrichtungen (31) jeweils ein Identifizierungsmodul (314) umfassen, welches eine Geräteidentifizierung an eines der genannten Kommunikationsendgeräte (1) überträgt, dass die genannten Entscheidungsmodule (213) sich in den genannten Kommunikationsendgeräten (1) befinden und dass die genannten Entscheidungsmodule (312) Entscheide über die Zutrittsberechtigung unter zusätzlicher Berücksichtigung der genannten Geräteidentifizierung fällen und Resultate dieser Entscheide jeweils an eine der genannten Lesevorrichtungen (31) übertragen.

16. System gemäss einem der Ansprüche 11 bis 15, **dadurch gekennzeichnet, dass** mindestens gewisse Zutritts-Tickets eine Benutzeridentifizierung umfassen, dass die genannten Speichermodule (21) jeweils eine Benutzeridentifizierung enthalten und dass die genannten Entscheidungsmodule (213, 312) beim Entscheid über die Zutrittsberechtigung überprüfen, ob die Benutzeridentifizierung des betreffenden Zutritts-Tickets mit der Benutzeridentifizierung im betreffenden Speichermodul (21) übereinstimmt.

17. System gemäss einem der Ansprüche 11 bis 16, **dadurch gekennzeichnet, dass** die genannten Lesevorrichtungen (31) jeweils ein Identifizierungsmodul (314) umfassen, welches eine digital signierte Geräteidentifizierung an eines der genannten Kommunikationsendgeräte (1) überträgt und dass die genannten Kommunikationsendgeräte (1) jeweils ein erstes Authentifizierungsmodul (215) umfassen, welches eine betreffende Lesevorrichtung (31) anhand dieser Geräteidentifizierung authentifiziert.

18. System gemäss Anspruch 17, **dadurch gekennzeichnet, dass** die genannten Speichermodule (21) jeweils eine Benutzeridentifizierung enthalten, dass das genannte erste Authentifizierungsmodul (215) nach einer positiven Authentifizierung der betreffenden Lesevorrichtung (31) die gespeicherte Benutzeridentifizierung mit einer digitalen Signatur an die betreffende Lesevorrichtung (31) überträgt und dass die genannten Lesevorrichtungen (31) jeweils ein zweites Authentifizierungsmodul (311) umfassen, welches den Benutzer des betreffenden Kommunikationsendgeräts (1) anhand dieser Benutzeridentifizierung authentifiziert.

19. System gemäss einem der Ansprüche 11 bis 18, **dadurch gekennzeichnet, dass** die genannten Lesevorrichtungen (31) jeweils ein Bestätigungsmodul (313) umfassen, welches nach einem gefällten positiven Entscheid eine Zutrittsbestätigung auf das betreffende Speichermodul (21) überträgt.

20. System gemäss einem der Ansprüche 11 bis 19, **dadurch gekennzeichnet, dass** die genannte kontaktlose Schnittstelle (13) jeweils energetisch durch die genannten Lesevorrichtungen (31) gespeist wird.

## Claims

1. Method for ordering, loading and using admission tickets for access to access-controlled service devices (3), in which method admission tickets are stored in a memory module (21) of a mobile communications terminal (1), in which method data are exchanged between the memory module (21) and a reading device (31) of a respective service device (3) via a contactless interface (13), in which method a decision about the access authorization of the user of the mobile communications terminal (1) is made taking into account ticket information contained in the said admission ticket, and in which method, in accordance with the decision made, access of the user to the respective service device (3) is granted or denied by an access device (32) connected to the said reading device, **characterised by** the following steps:
- ordering at least one admission ticket from a reservation centre (4) through transmission of order data, indicated by a user, via an order channel, of various possible order channels, to the said reservation centre (4), the order data containing the call number of the mobile communications terminal (1), and
- transmitting the ordered admission ticket via a mobile network (6) to that mobile communications terminal (1), to which the said call number contained in the order data is assigned.

2. Method according to claim 1, **characterised in that** the said admission tickets each contain a ticket number which is provided with a digital signature, the admission ticket stored in the said memory module (21) is transmitted to the said reading device (31), access data are transmitted from the said reservation centre (4) to the said reading device (31), and the decision about access authorization is made taking into account these access data and by checking the said signature.

3. Method according to claim 1, **characterised in that** the said admission tickets contain ticket information about at least one access-controlled service device (3), the decision about access authorization is made taking into account this ticket information and with a positive decision the admission ticket stored in the memory module (21) is marked as used.

4. Method according to claim 3, **characterised in that** the said ticket information is transmitted to the said reading device (31) and the decision is made in this reading device (31).

5. Method according to claim 3, **characterised in that** the said reading device (31) transmits a device identification to the said communications terminal (1), the decision is made in this communications terminal (1) additionally taking into account the said device identification, and the result of this decision is transmitted to the said reading device (31).

6. Method according to one of the claims 1 to 5, **characterised in that** at least certain admission tickets are assigned to a particular user, and with the decision about access authorization it is checked whether the respective certain admission ticket is assigned to the user, who is identified through a user identification stored in the said memory module (21).

7. Method according to one of the claims 1 to 6, **characterised in that** the said reading device (31) transmits a digitally signed device identification to the said communications terminal (1), and the said reading device (31) is authenticated in the communications terminal (1) on the basis of this device identification before data stored in the memory module (21) are transmitted to the reading device (31).

8. Method according to claim 7, **characterised in that**, following a positive authentication of the said reading device (31), a user identification, with a digital signature, stored in the said memory module (21), is transmitted to the said reading device (31), and the said reading device (31) authenticates the user of the said communications terminal (1) on the basis of this user identification.

9. Method according to one of the claims 1 to 8, **characterised in that**, after a positive decision has been made, an access confirmation is transmitted by the said reading device (31) to the said memory module (21).

10. Method according to one of the claims 1 to 9, **characterised in that** the said contactless interface (13) is supplied with energy by the said reading device (31).

11. System for ordering, loading and using admission tickets, which system includes a mobile network (6) in which a multiplicity of users are able to communicate by means of mobile communications terminals (1), and to which mobile network (6) at least one reservation centre (4) is connected, which system includes access-controlled service devices (3), for the access to which service devices (3) said admission tickets are used, the said service devices (3) being provided with reading devices (31) which include transceivers (33) for the exchange of data via a contactless interface (13), the said communications terminals (1) each containing a loading module (211), which loading module (211) stores received admission tickets in a memory module (21) of the respective communications terminal (1), the said communications terminals (1) each including a communications module (212) that exchanges data between the said memory module (21) and one of the said reading devices (31) by means of a transceiver (11) via the said contactless interface (13), which system includes decision-making modules (213, 312), which decision-making modules (213, 312) make decisions about the access authorization of the user of one of the said communications terminals (1) taking into account ticket information contained in the said admission tickets, and the said reading devices (31) being connected to access devices (32), which, in accordance with the decision made, grant or deny the said user access to one of the said service devices (3), **characterised**
**in that** the said reservation centre (4) includes an ordering module (41) which receives orders, via various order channels, with order data, indicated by a user, for admission tickets, the order data comprising the call number of one of the said communications terminals (1), and
**in that** the said reservation centre (4) includes a transmission module (44) which transmits ordered admission tickets, via a mobile network (6), to that communications terminal (1) to which the call number contained in the order data is assigned.

12. System according to claim 11, **characterised in that** the said admission tickets each contain a ticket number provided with a digital signature, a said reservation centre (4) includes a table (43) with stored access data, the said reservation centre (4) is connected to the said reading devices (31) via a telecommunications network (5), the said reservation centre (4) includes an updating module (42) which transmits the said access data via the said telecommunications network (5) to one of the said reading devices (31), and the said decision-making modules (312) are located in the said reading devices (31) and make decisions about access authorization taking into account said access data and by checking the said signature.

13. System according to claim 12, **characterised in that** the said admission tickets contain ticket information about at least one of the access-controlled service devices (3), the said decision-making modules (213, 312) make decisions about the access authorization taking into account this ticket information, and the said communications terminals (1) each include a cancellation module (214), which, with a positive decision, marks as used the admission ticket stored in the respective memory module (21).

14. System according to claim 13, **characterised in that** the said decision-making modules (312) are located in the said reading devices (31).

15. System according to claim 13, **characterised in that** the said reading devices (31) each include an identification module (314) which transmits a device identification to one of the said communications terminals (1), the said decision-making modules (213) are located in the said communications terminals (1), and the said decision-making modules (312) make decisions about the access authorization taking into account in addition the said device identification and transmit results of these decisions in each case to one of the said reading devices (31).

16. System according to one of the claims 11 to 15, **characterised in that** at least certain admission tickets include a user identification, the said memory modules (21) each contain a user identification, and the said decision-making modules (213, 312), in deciding about the access authorization, check whether the user identification of the respective admission ticket coincides with the user identification in the respective memory module (21).

17. System according to one of the claims 11 to 16, **characterised in that** the said reading devices (31) each include an identification module (314), which transmits a digitally signed device identification to one of the said communications terminals (1), and the said communications terminals (1) each include a first authentication module (215), which authenticates a respective reading device (31) on the basis of this device identification.

18. System according to claim 17, **characterised in that** the said memory modules (21) each contain a user identification, the said first authentication module (215) transmits the stored user identification with a digital signature to the respective reading device (31), after a positive authentication of the said reading device (31), and the said reading devices (31) each include a second authentication module (311), which authenticates the user of the respective communications terminal (1) on the basis of this user identification.

19. System according to one of the claims 11 to 18, **characterised in that** the said reading devices (31) each include a confirmation module (313), which, after a positive decision has been made, transmits an access confirmation to the respective memory module (21).

20. System according to one of the claims 11 to 19, **characterised in that** the said contactless interface (13) is supplied in each case with energy by the said reading devices (31).

## Revendications

1. Procédé pour commander, charger et utiliser des tickets pour l'accès à des dispositifs de service (3) à accès contrôlé (3), procédé dans lequel des tickets d'accès sont mémorisés dans un module de mémoire (21) d'un terminal mobile de communication (1), procédé dans lequel des données sont échangées entre le module de mémoire (21) et un dispositif de lecture (31) d'un dispositif de service concerné (3) par l'intermédiaire d'une interface sans contact (13), procédé dans lequel une décision sur l'autorisation d'accès de l'utilisateur du terminal de communication mobile (1) est prise en tenant compte des informations contenues dans ledit ticket d'accès, et procédé dans lequel en fonction de la décision prise, l'accès au dispositif de service (3) est accordé ou refusé à l'utilisateur par un dispositif d'accès (32) relié audit dispositif de lecture, **caractérisé par** les étapes suivantes :
- commande d'au moins un ticket d'accès depuis une centrale de réservation (4) par transmission d'informations de commande qui ont été indiquées par l'utilisateur, par l'intermédiaire d'un canal de commande parmi différents canaux de commande possibles, à ladite centrale de réservation (4), les informations de commande comprenant le numéro d'appel du terminal mobile de communication (1), et
- transmission du ticket d'accès commandé par l'intermédiaire d'un réseau mobile (6) au terminal de communication mobile (1) auquel est associé le numéro d'appel contenu dans les informations de commande.

2. Procédé selon la revendication 1, **caractérisé en ce que** lesdits tickets d'accès contiennent respectivement un numéro de ticket qui est muni d'une signature numérique, **en ce que** le ticket d'accès stocké dans ledit module de mémoire (21) est transmis audit dispositif de lecture (31), **en ce que** des données d'accès sont transmises audit dispositif de lecture (32) par ladite centrale de réservation (4), et **en ce que** la décision relative à l'autorisation d'accès est prise en tenant compte de ces données d'accès et par vérification de ladite signature.

3. procédé selon la revendication 1, **caractérisé en ce que** lesdits tickets d'accès comprennent des informations de tickets relatives à au moins un dispositif de services (3) à accès contrôlé, **en ce que** la décision relative à l'autorisation d'accès est prise en tenant compte de ces informations de ticket et **en ce que** dans le cas d'une décision positive le ticket d'accès stocké dans le module de mémoire (21) est dévalorisé.

4. Procédé selon la revendication 3, **caractérisé en ce que** lesdites informations de ticket sont transmises audit dispositif de lecture (31) et **en ce que** la décision est prise dans ce dispositif de lecture (31).

5. Procédé selon la revendication 3, **caractérisé en ce que** ledit dispositif de lecture (31) transmet une identification de terminal au terminal de communication (1), **en ce que** la décision est prise dans ce terminal de communication (1), en tenant compte de ladite identification de terminal et **en ce que** le résultat de cette décision est transmis audit dispositif de lecture (31).

6. Procédé selon l'une des revendications 1 à 5, **caractérisé en ce qu'**au moins certains tickets d'accès sont associés à un utilisateur défini et **en ce qu'**au moment de la décision relative de l'autorisation d'accès, il est vérifié si le ticket d'accès concerné est associé à l'utilisateur qui est identifié par une identification d'utilisateur mémorisée dans ledit module de mémoire (21).

7. Procédé selon l'une des revendications 1 à 6, **caractérisé en ce que** ledit dispositif de lecture (31) transmet une identification de terminal signée numériquement audit terminal de communication (1) et **en ce que** ledit dispositif de lecture (31) est authentifié à l'aide de cette identification de terminal dans le terminal de communication (1), avant que des données mémorisées dans le module de mémoire (21) soient transmises au dispositif de lecture (31).

8. Procédé selon la revendication 7, **caractérisé en ce qu'**après une authentification positive dudit dispositif de lecture (31), une identification d'utilisateur mémorisée dans ledit module de mémoire (21) munie d'une signature numérique est transmise audit dispositif de lecture (31) et **en ce que** ledit dispositif de lecture (31) authentifie l'utilisateur dudit terminal de communication (1) à l'aide de cette identification d'utilisateur.

9. Procédé selon l'une des revendications 1 à 8, **caractérisé en ce qu'**après une décision positive prise par le dispositif de lecture (31), une autorisation d'accès est transmise audit module de mémoire (21).

10. Procédé selon l'une des revendications 1 à 9, **caractérisé en ce que** ladite interface sans contact (13) est alimentée en courant par ledit dispositif de lecture (31).

11. Système pour la commande, le chargement et l'utilisation de tickets d'accès, système qui comprend un réseau mobile (6), dans lequel un grand nombre d'utilisateurs peuvent communiquer au moyen d'un terminal mobile de communication (1) et réseau mobile (6) qui est relié à au moins une centrale de réservation (4), système qui comporte des dispositifs de service (3) à accès contrôlé, dispositifs de service pour l'accès desquels sont utilisés lesdits tickets d'accès, lesdits dispositifs de service (3) étant munis de dispositifs de lecture (31), lesquels comprennent des émetteurs-récepteurs (33) pour l'échange des données par l'intermédiaire d'une interface sans contact (13), lesdits terminaux de communication (1) comprenant respectivement un module de chargement (211), module de chargement (211) qui stocke des tickets d'accès reçus dans un module de mémoire (21) du terminal de communication considéré (1), lesdits terminaux de communication (1) comprenant respectivement un module de communication (212) qui échange au moyen d'un émetteur-récepteur (11) via ladite interface sans contact (13), des données entre ledit module de mémoire (21) et l'un desdits dispositifs de lecture (31), système qui comprend des modules de décision (213, 312), modules de décision (213, 312) qui prennent des décisions relatives à l'autorisation d'accès de l'utilisateur d'un desdits terminaux de communication (1) en tenant compte d'informations de ticket contenues dans lesdits tickets d'accès, et lesdits dispositifs de lecture (31) étant reliés auxdits dispositifs d'accès (32), qui accordent ou refusent audit utilisateur l'accès à l'un desdits dispositifs de service (3) en fonction de la décision prise, **caractérisé**
**en ce que** ladite centrale de réservation (4) comprend un module de commande (41), qui reçoit par différents canaux de commande, des commandes avec des informations de commande qui sont indiquées par un utilisateur, pour des tickets d'accès, les informations de commande comprenant le numéro d'appel d'un desdits terminaux de communication (1),
ladite centrale de réservation (4) comprend un module de transaction (44) qui transmet des tickets d'accès commandés par le réseau mobile (6) au terminal de communication (1) qui est associé au N) de téléphone contenu dans les informations de commande.

12. Système selon la revendication 11, **caractérisé en ce que** lesdits tickets d'accès comprennent respectivement un numéro de ticket qui est muni d'une signature numérique, **en ce que** ladite centrale de réservation (4) comprend un tableau (43) avec des données d'accès stockées, **en ce que** ladite centrale de réservation (4) est reliée par un réseau de télécommunication (5) auxdits dispositifs de lecture (31), **en ce que** ladite centrale de réservation (4) comprend un module d'actualisation (42), qui transmet lesdites données d'accès par l'intermédiaire dudit réseau de télécommunication (5) à l'une desdits dispositifs de lecture (31), et **en ce que** lesdits dispositifs de décision (312) se trouvent dans lesdits dispositifs de lecture (31) et prennent des décisions relatives à l'autorisation d'accès en tenant compte desdites données d'accès et par vérification de ladite signature.

13. Système selon la revendication 12, **caractérisé en ce que** lesdits tickets d'accès comportent des informations de tickets relatives à au moins l'un desdits dispositifs de service (3) d'accès contrôlé, **en ce que** lesdits modules de décision (213, 312) prennent des décisions relatives à l'autorisation d'accès en tenant compte de ces informations de ticket et **en ce que** lesdits terminaux de communication (1) comprennent respectivement un module de dévalorisation (214), qui dévalorise lors d'une décision positive le ticket d'accès stockés dans le module de mémoire concerné (21).

14. Système selon la revendication 13, **caractérisé en ce que** lesdits modules de décision (312) se trouvent dans lesdits dispositifs de lecture (31).

15. Système selon la revendication 13, **caractérisé en ce que** lesdits dispositifs de lecture (31) comportent respectivement un module d'identification (314), qui transmet une identification de terminal à l'un desdits terminaux de communication (1), **en ce que** lesdits modules de décision (213) se trouvent dans lesdits terminaux de communication (1) et **en ce que** lesdits modules de décision (213) se trouvent dans lesdits terminaux de communication (1) et **en ce que** lesdits modules de décision (312) prennent des décisions relatives à l'autorisation d'accès en tenant en compte en supplément de ladite identification d'accès et transmettent les résultats de ces décisions respectivement à l'un desdits dispositifs de lecture (31).

16. Système selon l'une des revendications 11 à 15, **caractérisé en ce qu'**au moins certains tickets d'accès comprennent une identification d'utilisateur, **en ce que** lesdits modules de mémoire (21) contiennent respectivement une identification d'utilisateur et **en ce que** lesdits modules de décision (213, 312) vérifient lors de la décision relative à l'autorisation d'accès, si l'identification utilisateur .du ticket d'accès concerné correspond à l'identification d'utilisateur dans le module de mémoire concerné (21).

17. Système selon l'une des revendications 11 à 16, **caractérisé en ce que** lesdits dispositifs de lecture (31) comportent un module d'identification (314) qui transmet une identification de terminal signée numériquement à l'un desdits terminaux de communication (1) et **en ce que** lesdits terminaux de communication (1) comprennent respectivement un premier module d'authentification (215) qui authentifie un dispositif de lecture concerné (31) à l'aide de cette identification de terminal.

18. Système selon la revendication 17, **caractérisé en ce que** lesdits modules de mémoire (21) contiennent respectivement une identification d'utilisateur, **en ce que** ledit premier module d'authentification (215) transmet après une authentification positive du dispositif de lecture concerné (31), l'identification d'utilisateur mémorisée avec une signature numérique au dispositif de lecture concerné (31) et **en ce que** lesdits dispositifs de lecture (31) comprennent respectivement un second module d'authentification (311) qui authentifie l'utilisateur du terminal concerné de communication (1) à l'aide de cette identification d'utilisateur.

19. Système selon l'une des revendication 11 à 18, **caractérisé en ce que** lesdits dispositifs de lecture (31) comprennent respectivement un module de validation (313) qui transmet après une décision positive prise une validation d'accès au module de mémoire concerné (21).

20. Système selon l'une des revendications 11 à 18, **caractérisé en ce que** ladite interface sans contact (13) est alimentée respectivement en énergie par lesdits dispositifs de lecture (31).
